# EUROPEAN PATENT APPLICATION

(11) **EP 4 464 757 A1**
(43) Date of publication of application: **20.11.2024**
(21) Application number: 23173929.3
(22) Date of filing: 17.05.2023
(51) Int. Cl.: C09K 5/10

(54) **NOVEL COOLANT WITH LOW ELECTRICAL CONDUCTIVITY**

(71) Applicant: BASF SE, 67056 Ludwigshafen am Rhein (DE)
(72) Inventor: Hirosue, Masayuki, 67056 Ludwigshafen am Rhein (DE); Malkowsky, Itamar Michael Dr., 67056 Ludwigshafen am Rhein (DE); Nitzschke, Uwe, 67056 Ludwigshafen am Rhein (DE); Schindler, Nina, 67056 Ludwigshafen am Rhein (DE); Strauss, Ralf, 67056 Ludwigshafen am Rhein (DE)
(74) Representative: BASF IP Association

(57) **Abstract**

The present application describes coloured coolants with low electrical conductivity, the corresponding coolant concentrates, and the use of such coolants in cooling systems of vehicles with electric engines, fuel cells or hybrid engines with a combination of combustion engines with electric engines or a combination of combustion engines with fuel cells.

## Description

The present application describes coloured coolants with low electrical conductivity, the corresponding coolant concentrates, and the use of such coolants in cooling systems of vehicles with electric engines, fuel cells or hybrid engines with a combination of combustion engines with electric engines or a combination of combustion engines with fuel cells.

WO 02/101848 discloses coolants comprising azole derivatives and optionally orthosilicates for cooling of fuel-cell drives. A low conductivity is crucial for such coolants in order to prevent a short circuit of the electrodes and to improve the safety features of the cooling system.

The coolant compositions disclosed in WO 02/101848 exhibit an electrical conductivity of at most 50 µS/cm, preferably at most 25 µS/cm, more preferably at most 10 µS/cm, and especially at most 5 µS/cm.

However, the coolant compositions explicitly disclosed in WO 02/101848 are colourless and no colourants or dyes are disclosed in WO 02/101848. Coolants usually are coloured since the colouration identifies the coolant in the system and avoids confusion in case further coolant is to be added or refilled. The colouration reduces the danger of mixing different coolants which is especially negative for systems in which a low electrical conductivity is required.

For compositions with a low electrical conductivity as disclosed in WO 02/101848 the dyes significantly contribute to the overall electrical conductivity of the coolant although they are used in very small amounts, see e.g. the comparative example. This is partly because of the ionic groups present in such dyes to make the dyes water-soluble or to form extended pi electron-systems as the chromophore of the dye.

WO 2002/90462 A1 discloses conventional coolant compositions comprising C.I. Reactive Violet 5 as dye. This document focusses on stability of the composition, electrical conductivity is not an issue.

JP 2022 89741 A discloses coolants with a low electrical conductivity comprising a water soluble polymeric dye. The polymeric dyes are obtained by reacting a water-soluble polymeric chain, such as polyethylene glycols, with a dye, such as triarylmethane dyes, to make them water soluble, hence, the polymeric dyes according to JP 2022 89741 A exhibit a weight average molecular weight of 1000 or more. Only non-ionic dyes are disclosed in order to prevent them from being adsorbed to an ion exchange resin present in the cooling system.

It is a disadvantage of such polymeric dyes that the modification of such dyes with polyethylene glycols requires a separate chemical synthesis with at least one additional reaction step. It would be advantageous to use commercially available dyes without further chemical modification.

Therefore, it was an object of the present invention to provide coolant compositions with a low electrical conductivity comprising at least one dye.

The respective coolants need to be suitable for use in vehicles with an electrical drive and have to fulfil stability requirements on storage.

The object was achieved by coolants, comprising
(A) at least one antifreezing agent selected from the group consisting of 1,2-ethylene glycol,1,2-propylene glycol, 1,3-propylene glycol, glycerol, dimers, trimers or oligomers thereof, and mono- or dialkyl ethers thereof
(B) water
(C) at least one azole derivative
(D) optionally at least one ester of orthosilicic acid or alkoxy alkylsilane
(G) optionally at least one silicophosphonate
(H) optionally at least one further coolant additive
(I) at least one dye, and

wherein the electrical conductivity of the coolant composition without the at least one dye (I) is at most 10 µS/cm, preferably at most 8 µS/cm, more preferably at most 7, most preferably at most 5 µS/cm, and especially at most 4 µS/cm, and
wherein the electrical conductivity of the coolant composition with addition of the dye (I) is increased by not more than 2.5 µS/cm, preferably by not more than 2 µS/cm, and very preferably not more than 1.5 µS/cm.

Unless stated otherwise the electrical conductivity given in this text is measured according to ASTM D 1125 at 25 °C.

Such coolants exhibit both, a low electrical conductivity which makes them usable as coolants for vehicles with an electrical drive and good anti-corrosion properties, especially against aluminium corrosion.

It is one of the advantages that the coolants exhibit a very low electrical conductivity. Many coolant circuits for cooling of vehicles with an electrical drive comprise at least one ion exchanger in the loop in order to remove ionic degradation products from the coolants or traces of metal ions from corrosion so that the electrical conductivity remains low, see e.g. WO 00/17951. It is an advantage of a preferred embodiment that the coolant with a dye (I) bearing only minimal charges present is especially suitable for such coolant circuits, since the ion exchanger would remove charged compounds from the coolant. Since dye (I) is such a charged compound, such compound would be removed by the ion exchanger while the coolant is pumped in a circle. Therefore, it is a special feature of this preferred embodiment that such coolants with dyes bearing not more than two charged groups are used in cooling systems of vehicles with electric engines, fuel cells or hybrid engines, wherein the cooling system comprises at least one ion exchanger, either anion exchanger or cation exchanger or both.

Details to the constituents are as follows:

### Glycol (A)

As antifreezing agent (A) according to the present invention one or more compounds selected from the group consisting of 1,2-ethylene glycol, 1,2-propylene glycol, 1 ,3-propylene glycol, glycerol or dimers, trimers or oligomers thereof or mono- or dialkyl ethers thereof are used.

Preference is given to 1 ,2-ethylene glycol or 1,2-propylene glycol or dimers, trimers or oligomers thereof or mono- or dialkyl ethers thereof.

Special preference is given to 1,2-ethylene glycol or 1,2-propylene glycol, especially 1,2-ethylene glycol.

Preferably 1,2-propylene glycol and its derivatives is used. Derivatives of 1,2-propylene glycol may be poly- and oligomers as well as mono- or dialkyl ethers of 1,2-propylene glycol, its poly- and oligomers.

More preferably 1,2-ethylene glycol and its derivatives is used. Derivatives of 1,2-ethylene glycol may be poly- and oligomers as well as mono- or dialkyl ethers of 1,2-ethylene glycol, its poly- and oligomers. Examples are diethylene glycol, triethylene glycol, diethylene glycol mono C₁-C₄ alkyl ether, and triethylene glycol mono C₁-C₄ alkyl ether, even more preferably 1,2-ethylene glycol, diethylene glycol, and triethylene glycol, most preferably 1,2-ethylene glycol or diethylene glycol, and especially 1,2-ethylene glycol.

Dimers, trimers or oligomers of the alkylene glycols mentioned are di alkylene glycols, tri alkylene glycols, tetra alkylene glycols as well as higher homologues thereof up to a molecular weight of 598 g/mol.

Preference is given to the monomeric alkylene glycols and their dimers or trimers, more preferred are the monomeric alkylene glycols and their dimers, special preference is given to the monomeric alkylene glycols.

Mono- or dialkyl ethers of the above-mentioned alkylene glycols and their poly- and oligomers are preferably mono- or di-C₁- to C₄-alkyl ethers, more preferably mono-C₁- to C₄-alkyl ethers, even more preferably methyl-, ethyl- or n-butyl ethers, especially mono- methyl-, ethyl- or n-butyl ethers.

In the context of the present text the phrase "C₁- to C₄-alkyl" stands for methyl, ethyl, n-propyl, iso-propyl, n-butyl, iso-butyl, sec-butyl and tert-butyl, preferably methyl, ethyl, n-propyl, n-butyl, iso-butyl, and tert-butyl, more preferably methyl, ethyl, and n-butyl.

Preferably compounds (A) are selected from the group consisting of monoethylene glycol, diethylene glycol, triethylene glycol, tetraethylene glycol and mixtures thereof, 1,3-propanediol, higher poly alkylene glycols, alkylene glycol ethers, for example monoethylene glycol monomethyl ether, diethylene glycol monomethyl ether, triethylene glycol monomethyl ether, tetraethylene glycol monomethyl ether, monoethylene glycol monoethyl ether, diethylene glycol monoethyl ether, triethylene glycol monoethyl ether, tetraethylene glycol monoethyl ether, monoethylene glycol mono-n-butyl ether, diethylene glycol mono-n-butyl ether, triethylene glycol mono-n-butyl ether and tetraethylene glycol mono-n-butyl ether or glycerol, in each case either alone or as mixtures thereof.

Preferably compound (A) is 1,2-ethylene glycol or 1,2-propylene glycol, especially 1,2-ethylene glycol.

### Water (B)

Water used for the coolants according to the present invention should be ion-free, designating water with a neutral pH-value and comprising essentially no further ions than those hydroxide ions and hydronium ions out of the autoprotolysis of water at the respective temperature.

The electrical conductivity (throughout this text determined according to ASTM D 1125) at 25 °C of the ion-free water used should preferably not exceed 5 µS/cm, more preferably not more than 3, even more preferably not more than 2, and especially not more than 1 µS/cm.

The ion-free water used can be pure distilled or twice-distilled water or water which has been deionized, for example by ion exchange, preferably by ion exchange of at least its cations, more preferably by ion exchange of both cations and anions.

### Azole Derivatives (C)

Azole derivatives in the context of the present invention mean five-membered heterocyclic compounds having 2 or 3 heteroatoms from the group consisting of nitrogen and sulfur and comprise no or at most one sulfur atom and can bear an aromatic or saturated six-membered fused-on ring.

These five-membered heterocyclic compounds (azole derivatives) usually contain two N atoms and no S atom, 3 N atoms and no S atom or one N atom and one S atom as heteroatoms.

Preferred groups of the specified azole derivatives are annellated imidazoles and annellated 1 ,2,3-triazoles of the general formula 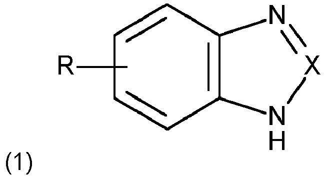 or 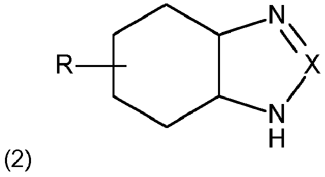 where
the variable R is hydrogen or a C₁-C₁₀-alkyl radical, in particular methyl or ethyl, and
the variable X is a nitrogen atom or the C-H group.

Typical and preferred examples of azole derivatives of the general formula (1) are benzimidazole (X = C-H, R = H), benzotriazoles (X = N, R = H) and tolutriazole (tolyltriazole) (X = N, R = CH₃). A typical example of an azole derivative of the general formula (2) is hydrogenated 1 ,2,3-tolutriazole (tolyltriazole) (X = N, R = CH₃).

A further preferred group of the specified azole derivatives is benzothiazoles of the general formula (3) 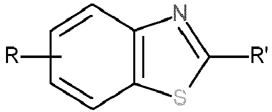 where
the variable R is as defined above and
the variable R' is hydrogen, a C₁-C₁₀-alkyl radical, in particular methyl or ethyl, or in particular a mercapto group (-SH). A typical example of an azole derivative of the general formula (3) is 2-mercaptobenzothiazole.

It is also possible, however less preferable, to use (2-benzothiazylthio)acetic acid (R' = -S-CH₂-COOH) or (2-benzothiazylthio) propionic acid (R' = -S-CH₂-CH₂-COOH). This embodiment is less preferable since the use of such free-acid compounds would increase the electrical conductivity of the coolant.

Further suitable azole derivatives are non-annellated azole derivatives of the general formula (4) 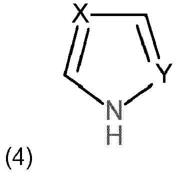 where
the variables X and Y together are two nitrogen atoms or
one nitrogen atom and a C-H group,
for example 1 H-1 ,2,4-triazole (X = Y = N) or preferably imidazole (X = N, Y = C-H).

For the purposes of the present invention, benzimidazole, benzotriazole, tolutriazole, hydrogenated tolutriazole or mixtures thereof, in particular benzotriazole or tolutriazole, are very particularly preferred as azole derivatives.

The azole derivatives mentioned are commercially available or can be prepared by conventional methods. Hydrogenated benzotriazoles such as hydrogenated tolutriazole are likewise obtainable as described in DE-A 1 948 794 and are also commercially available.

### Esters of Orthosilicic Acid or Alkoxy Alkylsilanes (D) (optionally)

Esters of orthosilicic acid are compounds of the formula

Si(OR¹)₄

wherein
R¹ is an organic substituent comprising 1 to 6 carbon atoms, for example a linear or branched, preferably a linear alkyl substituent comprising 1 to 6 carbon atoms or an aromatic substituent comprising 6 carbon atoms, more preferably an alkyl substituent comprising 1 to 4 carbon atoms and even more preferably an alkyl substituent comprising 1 or 2 carbon atoms.

Alkoxy alkylsilanes are less preferred and both the alkoxy substituent as well as the alkyl group comprise a linear or branched, preferably a linear alkyl substituent comprising 1 to 6 carbon atoms, more preferably an alkyl substituent comprising 1 to 4 carbon atoms and even more preferably an alkyl substituent comprising 1 or 2 carbon atoms.

Typical examples of compounds (D) are tetraalkoxysilanes, preferably tetra C₁-C₄-alkyloxysilanes, more preferably tetramethoxysilane and tetraethoxysilane, and alkoxy-alkylsilanes, preferably triethoxymethylsilane, diethoxydimethylsilane, ethoxytrimethylsilane, trimethoxymethylsilane, dimethoxydimethylsilane and methoxytrimethylsilane. Preference is given to tetraalkoxysilanes, particularly preferably tetramethoxysilane and tetraethoxysilane, with very particular preference being given to tetraethoxysilane.

Compounds (D) are mainly used as inhibitors of aluminium corrosion.

Preferably at least one compound (D) is present in the coolant composition.

The presence of at least one ester of orthosilicic acid (D) is advantageous since such esters of orthosilicic acid act as non-ionic inhibitors of aluminium corrosion. Alternatives to such non-ionic compounds (D) are e.g. anorganic silicates, such as sodium or potassium salts of the group consisting of orthosilicates (SiO₄⁴⁻), metasilicates (SiO₃²⁻), and pyrosilicates (Si₂O₇⁶⁻). However, since such anorganic silicates are ionic they tend to absorb dyes, especially ionic dyes. Furthermore, as ionic compounds they are adsorbed by ion exchange resins if present in the cooling system.

Therefore, it is a preferred embodiment of the present invention to use at least one compound (D) together with the dyes (I), more preferably together with ionic dyes (I).

### Monocarboxylic Acid (F)

Modern coolants often comprise carboxylic acids, such as monocarboxylic acids or dicarboxylic acids or carboxylic acids with a higher functionality, preferably monocarboxylic acids, as corrosion inhibitors for iron-based materials.

Suitable monocarboxylic acids (F) may be linear or branched-chain, aliphatic, cycloaliphatic or aromatic monocarboxylic acids with up to 20 carbon atoms, preferably with from 2 to 18, more preferably with from 5 to 16, even more preferably with from 5 to 14, most preferably with from 6 to 12, and especially with from 8 to 10 carbon atoms.

Branched-chain aliphatic monocarboxylic acids are preferred of the corresponding linear monocarboxylic acids.

Useful linear or branched-chain, aliphatic or cycloaliphatic monocarboxylic acids (F) are, for example, propionic acid, pentanoic acid, 2,2-dimethylpropanoic acid, hexanoic acid, 2,2-dimethylbutaneoic acid, cyclohexyl acetic acid, octanoic acid, 2-ethylhexanoic acid, nonanoic acid, isononanoic acid, decanoic acid, undecanoic acid or dodecanoic acid.

A suitable aromatic monocarboxylic acid (F) is in particular benzoic acid; additionally useful are also, for example, C₁- to C₈-alkylbenzoic acids such as o-, m-, p-methylbenzoic acid or p-tert-butylbenzoic acid, and hydroxyl-containing aromatic monocarboxylic acids such as o-, m- or p-hydroxybenzoic acid, o-, m- or p-(hydroxymethyl)benzoic acid or halobenzoic acids such as o-, m- or p-fluorobenzoic acid.

Especially preferred are 2-ethylhexanoic acid and isononanoic acid.

As used herein, isononanoic acid refers to one or more branched-chain aliphatic carboxylic acids with 9 carbon atoms. Embodiments of isononanoic acid used in the engine coolant composition may include 7-methyloctanoic acid (e.g., CAS Nos. 693-19-6 and 26896-18-4), 6,6-dimethylheptanoic acid (e.g., CAS No. 15898-92-7), 3,5,5-trimethylhexanoic acid (e.g., CAS No. 3302-10-1), 3,4,5-trimethylhexanoic acid, 2,5,5-trimethylhexanoic acid, 2,2,4,4-tetramethylpentanoic acid (e.g., CAS No. 3302-12-3) and combinations thereof. In a preferred embodiment, isononanoic acid has as its main component greater than 90% of one of 7-methyloctanoic acid, 6,6-dimethylheptanoic acid, 3,5,5-trimethylhexanoic acid, 3,4,5-trimethylhexanoic acid, 2,5,5-trimethylhexanoic acid, and 2,2,4,4-tetramethylpentanoic acid. The balance of the isononanoic acid may include other nine carbon carboxylic acid isomers and minor amounts of one or more contaminants. In a preferred embodiment, the isononanoic acid has as its main component greater than 90% of 3,5,5-trimethylhexanoic acid and even more preferably, the main component is greater than 95% 3,5,5-trimethylhexanoic acid.

It is possible, however disadvantageous, to use carboxylic acids with a higher functionality, e.g. di- or tricarboxylic acids, in addition to or instead of the monocarboxylic acids. The use of monocarboxylic acids has been shown to yield superior results compared to commonly used dicarboxylic acids, see examples.

If used, di- or tricarboxylic acids can be aliphatic, cycloaliphatic or aromatic, preferably aliphatic or aromatic and more preferably aliphatic with up to 20 carbon atoms, preferably with up to 18, more preferably with up to 16, even more preferably with up to 14, and especially up to 12 carbon atoms.

If used, examples of dicarboxylic acids are oxalic acid, malonic acid, succinic acid, glutaric acid, adipic acid, pimelic acid, suberic acid, azelaic acid, sebacic acid, undecanedioic acid, dodecanedioic acid, alkyl or alkenyl succinic acids, 2-metylbutane dioic acid, 2-ethylpentanedioic acid, 2-n-dodecylbutanedioic acid, 2-ndodecenylbutanedioic acid, 2-phenylbutanedioic acid, 2-(p-methylphenyl) butanedioic acid, 2,2-dimethylbutanedioic acid, 2,3-dimethylbutanedioic acid; 2,3,4 trimethylpentanedioic acid, 2,2,3-trimethylpentanedioic acid; 2-ethyl-3-methylbutanedioic maleic acid, fumaric acid, pent-2-enedioic acid, hex-2-enedioic acid; hex-3-endioic acid; 5-methylhex-2-enedioic acid; 2,3-dimethylpent-2-enedioic acid; 2-methylbut-2-enedioic acid, 2-dodecylbut-2-enedioic acid, phthalic acid, isophthalic acid, terephthalic acid and substituted phthalic acids such as 3-methylbenzene-1,2-dicarboxylic acid; 4-phenylbenzene-1,3-dicarboxylic acid; 2-(1-propenyl) benzene-1,4-dicarboxylic acid, and 3,4-dimethylbenzene-1,2-dicarboxylic acid.

If used, examples of tricarboxylic acids are benzene tricarboxylic acids (all isomers) and tria-zinetriiminocarboxylic acids such as 6,6',6"-(1,3,5-triazine-2,4,6-triyltriimino)trihexanoic acid.

In a preferred embodiment the coolants according to the invention do not contain any carboxylic acids with a functionality higher than 1.

However, carboxylic acids have the disadvantage that they increase the electrical conductivity. And if a component (D) is present such carboxylic acids may deteriorate the ester of orthosilicic acid.

Hence, preferably no carboxylic acids, especially no monocarboxylic acids (F) are present in the coolant, especially if a component (D) is present.

### Silicophosphonate (G)

### Furthermore, the coolant may optionally comprise at least one silicophosphonate (G).

Silicophosphonates are those of the general structure (5) 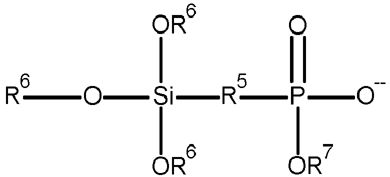 where
R⁵ is a bivalent organic residue, preferably a 1,ω-alkylene group with 1 to 6, preferably 1 to 4 carbon atoms, more preferably methylene, 1,2-ethylene, 1,2-propylene, 1,3-propylene or 1,4-butylene, most preferably 1,2-ethylene or 1,3-propylene, and especially 1,2-ethylene,
R⁶ and R⁷ are independently of another C₁- to C₄-alkyl, preferably methyl, ethyl, n-propyl, iso-propyl, n-butyl, iso-butyl, sec-butyl or tert-butyl, preferably methyl or ethyl.

Such silicophosphonates may exist as free phosphonate acid or in the form of their sodium or potassium salts, preferably sodium or potassium salt, more preferably as sodium salt.

Preferably no silicophosphonate (G) is present in the coolant composition, unless at least one compound (D) is present. In case at least one compound (D) is present in the coolant, the simultaneous presence of at least one silicophosphonate (G) constitutes a preferred embodiment of the present invention, since silicophosphonates exhibit a stabilising effect on compound (D).

### Further Coolant Additives (H)

It is possible to add further typical coolant additives to the coolants of the present invention, as long as they do not increase the electrical conductivity above the critical value pointed out above.

As further customary assistants, the inventive coolant may also comprise, in customary small amounts, defoamers (generally in amounts of from 0.003 to 0.008% by weight) and, for reasons of hygiene and safety in the event that it is swallowed, and bitter substances (for example of the denatonium benzoate type).

Wherever possible the use of non-ionic additives is preferred over ionic alternatives as long as a similar effect can be achieved using the non-ionic additives.

In a preferred embodiment the coolant according to the present invention does not comprise any further coolant additives (H).

### Dye (I)

According to the present invention the coolant composition comprises at least one dye, preferably one to three dyes, more preferably one or two dyes, and most preferably one dye.

It may be necessary to use a mixture of two dyes for achieving different shades of colour, e.g. a mixture of yellow and blue dyes to achieve green hues or red and blue dyes to achieve violet colour. This is preferred in case other dyes for achieving the desired colour yield a too high electrical conductivity or no dyes for the desired hue are available.

However, in order to keep the amount of electrically conducting compounds in the coolant as low as possible it is preferred to use one dye (I) only in amounts as low as possible.

The at least one dye (I) is used in amounts necessary for achieving the desired hue. Usually, 5 to 100 ppm by weight with regard to the total amount of the coolant is sufficient, preferably 10 to 75, more preferably 15 to 50, and even more preferably 15 to 30 ppm by weight.

It has been found that dyes with a low charge density (i.e. equally ionically charged groups per molecule) exhibit a lower electrical conductivity, see the comparative example. Therefore, dyes bearing not more than two equal ionic groups are preferred as compounds (I), more preferably are compounds (I) bearing not more than one ionic group.

In one embodiment of the present invention the compounds (I) do not bear any ionic group at all.

It has been found that such non-ionic dyes with a weight average molecular weight of less than 1000 g/mol, preferably not more than 800, more preferably less than 600, and even more preferably less than 500 g/mol may be used in the even without a chemical modification with polyethyleneglycol as long as their water solubility at 25 °C is at least 1 g/l.

In a preferred embodiment the at least one dye (I) comprises at least one ionic group. It has been found that ionic groups provide a sufficient solubility in the coolant medium without the necessity to increase the water solubility by reaction with polyethylene glycols and the increase of molecular weight connected with such a reaction.

The positive or negative net charge of the dyes (I) in the coolant according to the present invention is not more than 2, preferably not more than 1.5, more preferably not more than 1.

In a preferred embodiment the net charge of the dyes (I) is negative and not more than 2, preferably not more than 1.5, and very preferably not more than 1.

The phrase "net charge" refers to the average charge of the dyes (I) in the coolant circuit taking into account the presence of differently charged ionic groups, e.g. in zwitterionic dyes, and the degree of dissociation under the conditions in the coolant circuit.

The ionic groups may be cationic or anionic, e.g. quaternary ammonium groups as cationic groups or anions of carboxylic, sulfonic, sulfuric, phosphoric or phosphonic acid groups, preferably anions of carboxylic, sulfonic or sulfuric acid groups, more preferably anions of carboxylic or sulfonic acid groups, and especially anions of sulfonic acid groups.

Acidic functional groups, especially sulfuric and sulfonic acid groups, usually are present in the coolants in their deprotonated form at the pH-value of the coolants, see below. In the case of carboxylic acid groups the groups are deprotonated to a degree of at least 75%, preferably at least 80, more preferably at least 85, even more preferably at least 90, and especially at least 95% at the pH-value of the coolants.

In a preferred embodiment the dye (I) is selected from the group consisting of Xanthene dyes, Rhodamine dyes, Phthalocyanine dyes, and Anthraquinone dyes, while Azo dyes are less preferred.

Zwitterionic dyes as compounds (I) are less preferred, since zwitterions are absorbed from the coolant by either type of ion exchanger, i.e. anion exchangers, cation exchangers or mixed types.

### Composition

Main requirement of the coolants according to the present invention is that the final coolants including compound (I) should exhibit an electrical conductivity at 25 °C of less than 10, preferably less than 8 µS/cm (determined according to ASTM D 1125) to make the suitable for cooling systems of vehicles with electric engines.

Therefore, the amount of components (C) to (I) in the coolant are chosen in a way that the critical value for the electrical conductivity is not exceeded.

The pH-value of the coolants is usually from 5 to 9, preferably from 5.5 to 8.5, and more preferably from 6 to 8.

Typically, the coolants according to the invention are composed as follows:
(A) antifreezing agent: 10 to 90 wt%, preferably 20 to 80 wt%, more preferably 30 to 70 wt%
(B) water: 10 to 90 wt%, preferably 20 to 80 wt%, more preferably 30 to 70 wt%
(C) at least one azole derivative: 0.01 to 1 wt%, preferably 0.02 to 0.9 wt%, more preferably 0.03 to 0.8 wt%, even more preferably 0.04 to 0.5, especially 0.05 to 0.3 wt%
(D) optionally at least one ester of orthosilicic acid or alkoxy alkylsilane: if present 0.01 to 1 wt%, preferably 0.02 to 0.9 wt%, more preferably 0.03 to 0.8 wt%, even more preferably 0.04 to 0.5, especially 0.05 to 0.3 wt%
(G) optionally at least one silicophosphonate: 0 to 1 wt%, preferably 0.01 to 0.8 wt%, more preferably 0.02 to 0.6 wt%
(H) optionally at least on further coolant additive: 0 to 0.5 wt% for each further coolant additive, preferably 0.01 to 0.4 wt%, more preferably 0.02 to 0.3 wt%,
(I) 5 to 100 ppm by weight, preferably 10 to 75, more preferably 15 to 50, and even more preferably 15 to 30 ppm by weight,
with the proviso that the sum of all components always add up to 100 wt%.

A further embodiment of the present invention are coolant concentrates. Coolants usually are obtained from coolant concentrates by dilution with water (B). Hence, the coolant concentrates usually contain little or no water (B).

Typically, the coolant concentrates according to the invention are composed as follows:
(A) antifreezing agent: 50 to 99,9 wt%, preferably 60 to 99,8 wt%, more preferably 75 to 99,7 wt%
(B) water: 0 to 10 wt%, preferably 0 to 8 wt%, more preferably 0 to 5 wt%
(C) at least one azole derivative: 0.02 to 1 wt%, preferably 0.04 to 0.8 wt%, more preferably 0.06 to 0.6 wt%, even more preferably 0.08 to 0.5, especially 0.1 to 0.4 wt%
(D) optionally at least one ester of orthosilicic acid or alkoxy alkylsilane: if present 0.02 to 1 wt%, preferably 0.04 to 0.8 wt%, more preferably 0.06 to 0.6 wt%, even more preferably 0.08 to 0.5, especially 0.1 to 0.4 wt%
(G) optionally at least one silicophosphonate: 0 to 1 wt%, preferably 0.02 to 0.8 wt%, more preferably 0.04 to 0.6 wt%
(H) optionally at least on further coolant additive: 0 to 0.5 wt% for each further coolant additive, preferably 0.002 to 0.4 wt%, more preferably 0.004 to 0.3 wt%,
(I) 20 to 200 ppm by weight, preferably 30 to 150, more preferably 40 to 100, and even more preferably 40 to 60 ppm by weight,
with the proviso that the sum of all components always add up to 100 wt.

A further embodiment of the present invention are coolant super concentrates. Coolant concentrates usually are obtained from coolant super concentrates by dilution with the glycol (A), respectively coolants may be obtained from coolant super concentrates by dilution with the glycol (A) and water (B). Hence, the coolant concentrates usually contain little or no water (B). In the concentrates or super concentrates glycol (A) acts as a solvent for the other constituents and, therefore, may be present in higher amounts.

Typically, the coolant super concentrates according to the invention are composed as follows:
(A) antifreezing agent: 70 to 99,5 wt%, preferably 80 to 99 wt%, more preferably 90 to 98 wt%
(B) water: 0 to 10 wt%, preferably 0 to 8 wt%, more preferably 0 to 5 wt%
(C) at least one azole derivative: 0.05 to 5 wt%, preferably 0.1 to 4 wt%, more preferably 0.2 to 3 wt%, even more preferably 0.3 to 2, especially 0.4 to 1.5 wt%
(D) optionally at least one ester of orthosilicic acid or alkoxy alkylsilane: if present 0.05 to 5 wt%, preferably 0.1 to 4 wt%, more preferably 0.2 to 3 wt%, even more preferably 0.3 to 2, especially 0.4 to 1.5 wt%
(G) optionally at least one silicophosphonate: 0 to 5 wt%, preferably 0.02 to 4 wt%, more preferably 0.04 to 3 wt%
(H) optionally at least on further coolant additive: 0 to 1 wt% for each further coolant additive, preferably 0.005 to 0.8 wt%, more preferably 0.008 to 0.6 wt%,
(I) 40 to 400 ppm by weight, preferably 60 to 300, more preferably 80 to 200, and even more preferably 80 to 120 ppm by weight,
with the proviso that the sum of all components always add up to 100 wt%.

Because of their low electrical conductivity the coolants according to the present invention may be used in cooling systems of vehicles with electric engines, fuel cells or hybrid engines with a combination of combustion engines with electric engines or a combination of combustion engines with fuel cells.

In a preferred embodiment the coolants according to the present invention may be used in cooling systems comprising at least one ion exchanger in the loop of the coolant circuit of vehicles with electric engines, fuel cells or hybrid engines with a combination of combustion engines with electric engines or a combination of combustion engines with fuel cells.

### Examples

The invention is illustrated in the following examples, but without it being restricted thereto.

A colourless coolant composition was prepared by mixing the constituents as listed in Table 1 (all amounts given in weight%) and electrical conductivity according to ASTM D 1125 at 25 °C [µS/cm] was determined.

**Table 1**

| Raw material | |
|---|---|
| Monoethylene glycol | 50.0 |
| Pure water (distilled) | 49.8 |
| Benzotriazole | 0.1 |
| Tetraethoxysilane | 0.1 |
| Total | 100 |

To this uncoloured coolant composition the dyes as pointed out in Table 2 were added and the electrical conductivity according to ASTM D 1125 at 25 °C [µS/cm] was determined.

**Table 2**

| Ex. | Amount [ppm] | Dye | Electrical Conductivity at 25°C [µS/cm] |
|---|---|---|---|
| 1 | 0 | -- | 0.9 |
| 2 | 25 | Chromatint Blue 2440 | 1.6 |
| 3 | 25 | Chromatint Red 2629 | 1.6 |
| 4 | 25 | Chromatint Green 0652 | 1.2 |
| 5 | 25 | Chromatint Orange 2701 | 1.5 |
| 6 | 25 | Chromatint Orange 1787 | 1.9 |
| 7 | 25 | Chromatint Blue 0408 | 1.5 |
| 8 | 25 | Chromatint Yellow 0963 | 1.8 |
| 9 | 25 | Remazol Brilliant Violett 5R | 12.2 |

Example 1 is the blank value of the coolant according to Table 1 without a dye, Example 9 is comparative

The samples of Examples 1 to 9 were subjected to a foam test according to ASTM D 1881. All samples passed the test.

Samples of the above-mentioned compositions were stored at -15 °C, 60 °C, and 90 °C for 2 weeks and afterwards the electrical conductivity according to ASTM D 1125 at 25 °C [µS/cm] as well as the visual appearance was determined:

| | | | Storage at [°C] | -15 | | 60 | | 90 | |
|---|---|---|---|---|---|---|---|---|---|
| Ex. | Amount [ppm] | Dye | Start | (a) | (b) | (a) | (b) | (a) | (b) |
| 1 | 0 | -- | 0.9 | 1.2 | (c) | 2.0 | (c) | 3.5 | n.d. |
| 2 | 25 | Chromatint Blue 2440 | 1.6 | 1.8 | (c) | 2.0 | (c) | 7.1 | (c) |
| 3 | 25 | Chromatint Red 2629 | 1.6 | 1.8 | (c) | 2.7 | (c) | n.d. | n.d. |
| 4 | 25 | Chromatint Green 0652 | 1.2 | 1.4 | (c) | 1.6 | (c) | n.d. | n.d. |
| 5 | 25 | Chromatint Orange 2701 | 1.5 | 1.8 | (c) | 2.7 | (c) | n.d. | n.d. |
| 6 | 25 | Chromatint Orange 1787 | 1.9 | 2.2 | (c) | 2.4 | (c) | n.d. | n.d. |
| 7 | 25 | Chromatint Blue 0408 | 1.5 | 1.5 | (c) | 3.0 | (c) | n.d. | n.d. |
| 8 | 25 | Chromatint Yellow 0963 | 1.8 | 1.7 | (c) | 2.1 | (c) | 4.6 | (c) |
| 9 | 25 | Remazol Brilliant Violett 5R | 12.2 | 12.0 | (c) | 12.2 | (c) | n.d. | n.d. |

| | | | | | | | | | |
|---|---|---|---|---|---|---|---|---|---|
| (a) Electrical Conductivity at 25°C [µS/cm] (b) visual appearance (c) stable, unchanged n.d. not determined | | | | | | | | | |

Remazol Brilliant Violett 5R ((3Z)-5-acetamido-3-[[2-hydroxy-5-(2-sulfonato oxyethylsulfonyl) phenyl]hydrazinylidene]-4-oxonaphthalene-2,7-disulfonate, CAS No 12226-38-9) of Comparative Example 9 is an azo dye bearing two sulfonate and one sulfate groups:

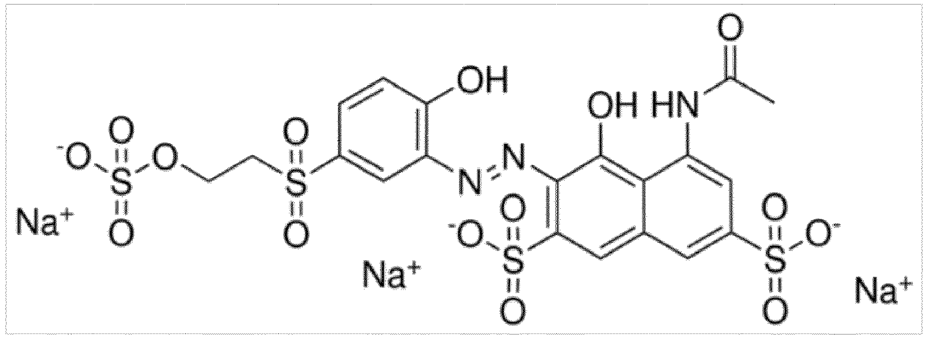

It can easily be seen that this dye bearing three negatively charged ionic groups raises the electrical conductivity over an acceptable level.

## Claims

1. Coolant, comprising
(A) at least one antifreezing agent selected from the group consisting of 1,2-ethylene glycol,1,2-propylene glycol, 1,3-propylene glycol, glycerol, dimers, trimers or oligomers thereof, and mono- or dialkyl ethers thereof
(B) water
(C) at least one azole derivative
(D) optionally at least one ester of orthosilicic acid or alkoxy alkylsilane
(G) optionally at least one silicophosphonate
(H) optionally at least one further coolant additive
(I) at least one dye, and
wherein the electrical conductivity measured according to ASTM D 1125 at 25 °C of the coolant composition without the at least one dye (I) is at most 10 µS/cm, preferably at most 8 µS/cm, more preferably at most 7, most preferably at most 5 µS/cm, and especially at most 4 µS/cm, and
wherein the electrical conductivity of the coolant composition with addition of the dye (I) is increased by not more than 2.5 µS/cm, preferably by not more than 2 µS/cm, and very preferably not more than 1.5 µS/cm.

2. Coolant according to Claim 1, wherein component (A) is selected from the group consisting of monoethylene glycol, diethylene glycol, triethylene glycol, tetraethylene glycol and mixtures thereof, 1,3-propanediol, higher poly alkylene glycols, alkylene glycol ethers, for example monoethylene glycol monomethyl ether, diethylene glycol monomethyl ether, triethylene glycol monomethyl ether, tetraethylene glycol monomethyl ether, monoethylene glycol monoethyl ether, diethylene glycol monoethyl ether, triethylene glycol monoethyl ether, tetraethylene glycol monoethyl ether, monoethylene glycol mono-n-butyl ether, diethylene glycol mono-n-butyl ether, triethylene glycol mono-n-butyl ether and tetraethylene glycol mono-n-butyl ether and glycerol.

3. Coolant according to any of the preceding claims, wherein compound (A) is 1,2-ethylene glycol or 1,2-propylene glycol.

4. Coolant according to any of the preceding claims, wherein the electrical conductivity according to ASTM D 1125 at 25 °C of the water (B) used does not exceed 5 µS/cm, more preferably not more than 3, even more preferably not more than 2, and especially not more than 1 µS/cm.

5. Coolant according to any of the preceding claims, wherein the azole derivative (C) is selected from the group consisting of benzimidazole, benzotriazole, tolutriazole, hydrogenated tolutriazole, (2-benzothiazylthio)acetic acid, and (2-benzothiazylthio) propionic acid.

6. Coolant according to any of the preceding claims, wherein at least one ester of orthosilicic acid (D) is present in the coolant, preferably selected from the group consisting of orthosilicic acid tetra ethyl ester and orthosilicic acid tetra methyl ester.

7. Coolant according to any of the preceding claims, **characterised in that** it does not contain any carboxylic acids.

8. Coolants according to any of the Claims 1 to 7 composed as follows:
(A) antifreezing agent: 10 to 90 wt%, preferably 20 to 80 wt%, more preferably 30 to 70 wt%
(B) water: 10 to 90 wt%, preferably 20 to 80 wt%, more preferably 30 to 70 wt%
(C) at least one azole derivative: 0.01 to 1 wt%, preferably 0.02 to 0.9 wt%, more preferably 0.03 to 0.8 wt%, even more preferably 0.04 to 0.5, especially 0.05 to 0.3 wt%
(D) optionally at least one ester of orthosilicic acid or alkoxy alkylsilane: if present 0.01 to 1 wt%, preferably 0.02 to 0.9 wt%, more preferably 0.03 to 0.8 wt%, even more preferably 0.04 to 0.5, especially 0.05 to 0.3 wt%
(G) optionally at least one silicophosphonate: 0 to 1 wt%, preferably 0.01 to 0.8 wt%, more preferably 0.02 to 0.6 wt%
(H) optionally at least on further coolant additive: 0 to 0.5 wt% for each further coolant additive, preferably 0.01 to 0.4 wt%, more preferably 0.02 to 0.3 wt%,
(I) 5 to 100 ppm by weight, preferably 10 to 75, more preferably 15 to 50, and even more preferably 15 to 30 ppm by weight,
with the proviso that the sum of all components always add up to 100 wt%.

9. Coolant according to any of the preceding claims, **characterised in that** the at least one dye (I) exhibits a positive or negative net charge in the coolant of not more than 2, preferably not more than 1.5, more preferably not more than 1.

10. Coolant according to any of the Claims 1 to 8, **characterised in that** the at least one dye (I) does not bear any ionic group, has a weight average molecular weight of less than 1000 g/mol and a water solubility at 25 °C is at least 1 g/l.

11. Coolant according to any of the preceding claims, **characterised in that** the at least one dye (I) is selected from the group consisting of Xanthene dyes, Rhodamine dyes, Phthalocyanine dyes, and Anthraquinone dyes.

12. Coolant concentrates composed as follows:
(A) antifreezing agent: 50 to 99,9 wt%, preferably 60 to 99,8 wt%, more preferably 75 to 99,7 wt%
(B) water: 0 to 10 wt%, preferably 0 to 8 wt%, more preferably 0 to 5 wt%
(C) at least one azole derivative: 0.02 to 1 wt%, preferably 0.04 to 0.8 wt%, more preferably 0.06 to 0.6 wt%, even more preferably 0.08 to 0.5, especially 0.1 to 0.4 wt%
(D) optionally at least one ester of orthosilicic acid or alkoxy alkylsilane: if present 0.02 to 1 wt%, preferably 0.04 to 0.8 wt%, more preferably 0.06 to 0.6 wt%, even more preferably 0.08 to 0.5, especially 0.1 to 0.4 wt%
(G) optionally at least one silicophosphonate: 0 to 1 wt%, preferably 0.02 to 0.8 wt%, more preferably 0.04 to 0.6 wt%
(H) optionally at least on further coolant additive: 0 to 0.5 wt% for each further coolant additive, preferably 0.002 to 0.4 wt%, more preferably 0.004 to 0.3 wt%,
(I) 20 to 200 ppm by weight, preferably 30 to 150, more preferably 40 to 100, and even more preferably 40 to 60 ppm by weight,
with the proviso that the sum of all components always add up to 100 wt%.

13. Use of a coolant according to any of the preceding claims as coolants in cooling systems of vehicles with electric engines, fuel cells or hybrid engines with a combination of combustion engines with electric engines or a combination of combustion engines with fuel cells.

14. Use of a coolant according to any of the Claims 1 to 11 as coolants in cooling systems comprising at least one ion exchanger in the loop of the coolant circuits of vehicles with electric engines, fuel cells or hybrid engines with a combination of combustion engines with electric engines or a combination of combustion engines with fuel cells.
